# EUROPEAN PATENT APPLICATION

(11) **EP 1 684 155 A2**
(43) Date of publication of application: **26.07.2006**
(21) Application number: 05257887.9
(22) Date of filing: 20.12.2005
(51) Int. Cl.: G06F 1/18

(54) **A device mounting rail for mounting a device in a computer system**

(30) Priority: 19.01.2005 US 38503
(71) Applicant: Hewlett-Packard Development Company, L.P., Houston, TX 77070 (US)
(72) Inventor: Woods, James A., Tomball, TX 77377 (US); Webster, James M., Houston, TX 77064 (US); Van Alstyne, Bryan R., The Woodlands, TX 77381 (US)
(74) Representative: Jackson, Richard Eric

(57) **Abstract**

A device mounting rail (114) for use in mounting a peripheral device (112) in a computer system (100) comprises first and second elongated sides (120, 122). The first elongated side (120) engages the peripheral device (112) when the device mounting rail (114) is used to mount the peripheral device (112) in the computer system (100). The second elongated side (122) engages a retaining wall (128) within the computer system (100) when the device mounting rail (114) is used to mount the peripheral device (112) in the computer system (100). The second elongated side (122) is also compressible toward the first elongated side (120) to generate a spring force. When the device mounting rail (114) is used to mount the peripheral device (112) in the computer system (100), the spring force maintains the peripheral device (112) in a substantially rigid relationship to the retaining wall (128) of the computer system (100).

## Description

### Background

There are a variety of ways to mount a peripheral device, such as a hard drive, in a housing of a computer system. It is usually preferred that the peripheral device not move around within the housing, so the performance of the peripheral device will not be adversely affected by such movement. Thus, the peripheral device is typically fixed to the housing by screws that bolt the peripheral device between retaining walls or within a cage or drive slot within the housing.

A trend in the computer industry, as well as in other industries, has been to reduce the amount of time required to manufacture and service products. The act of using a tool (e.g. a screwdriver) to insert the screws to mount the peripheral device in the housing, however, requires a certain amount of time during assembly or servicing of the computer system. Manufacturers, thus, have developed "tooless" techniques for more quickly mounting some types of peripheral devices in computer system housings. One such technique involves attaching elongated guide rails to the sides of a peripheral device and then sliding the peripheral device into a "device cage" mounted within the housing of the computer system. The guide rails guide the peripheral device into the device cage, which is shaped to receive the peripheral device with attached guide rails and to retain the peripheral device by the guide rails when the peripheral device is fully inserted into the device cage.

A problem arises with the dimensional tolerances with which the various parts (the peripheral device, the drive cage and the guide rails) are made. The peripheral device and guide rails are made with relatively "tight" tolerances. However, the drive cage is made with relatively "loose" tolerances. The result is that the "fit" between the drive cage and the combined peripheral device and guide rail may not be very tight or rigid. Without a tight fit, the peripheral device may be allowed to move within the drive cage, because the guide rails do not fully take up the space between the peripheral device and the drive cage. Therefore, upon operation of the peripheral device, such as upon spinning-up of a hard drive disk, the peripheral device can torque, twist or move within the drive cage, which can adversely affect the performance of the peripheral device, such as the seek time of a hard drive. Additionally, upon movement of the computer housing, the peripheral device can be battered within the drive cage, which can damage the peripheral device.

### Brief Description of the Drawings

Fig. 1 is a top, front, left side perspective view of a computer system incorporating an embodiment of the present invention.

Fig. 2 is a top, front, left side perspective view of a device mounting assembly for use in a system, such as the computer system shown in Fig. 1, and incorporating an embodiment of the present invention.

Fig. 3 is a top, front, left side exploded perspective view of a peripheral device and device mounting rails for use in a system, such as the computer system shown in Fig. 1, and incorporating an embodiment of the present invention.

Fig. 4 is a top plan view of a device mounting rail for use in a system, such as the computer system shown in Fig. 1, and incorporating an embodiment of the present invention.

Fig. 5 is a top plan view of another device mounting rail for use in a system, such as the computer system shown in Fig. 1, and incorporating another embodiment of the present invention.

Fig. 6 is a front elevation view of a device mounting assembly for use in a system, such as the computer system shown in Fig. 1, and incorporating an embodiment of the present invention.

Fig. 7 is a front elevation view of a peripheral device and device mounting rails for use in a system, such as the computer system shown in Fig. 1, and incorporating an embodiment of the present invention.

Fig. 8 is a front elevation view of a drive cage for use in a system, such as the computer system shown in Fig. 1, and incorporating an embodiment of the present invention.

Fig. 9 is a top, front, left side perspective view of an alternative device mounting rail for use in a system, such as the computer system shown in Fig. 1, and incorporating an alternative embodiment of the present invention.

### Detailed Description

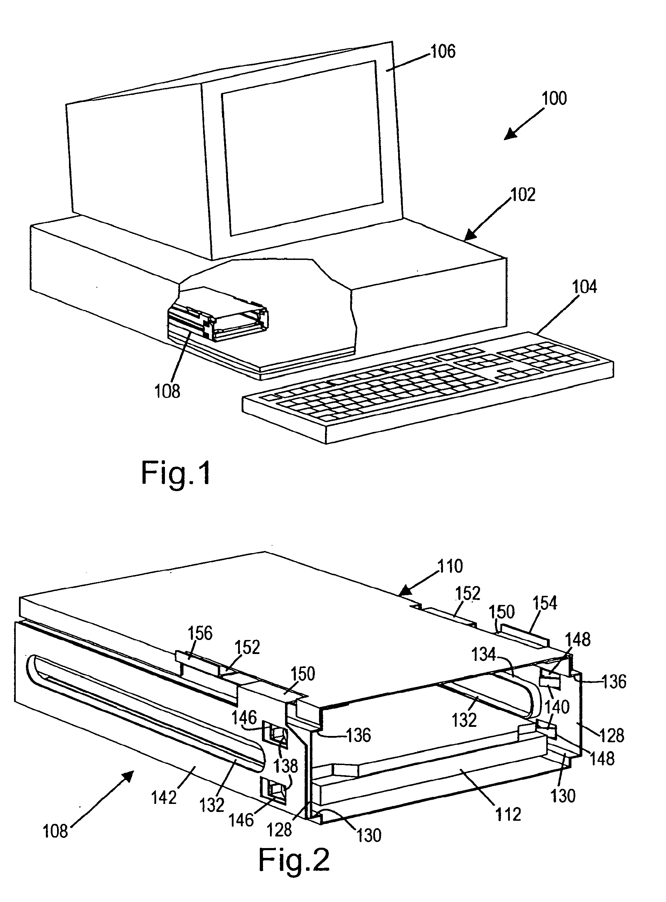

A computer system 100 incorporating an embodiment of the present invention is shown in Fig. 1 having elements such as a housing 102, a keyboard 104 and a display 106. A device mounting assembly 108, for mounting a peripheral device for use by the computer system 100, is disposed at an appropriate location within the housing 102. Although the present invention is described with respect to its use in the computer system 100 and the device mounting assembly 108, it is understood that the invention is not so limited, but may be used in any appropriate electronic system that includes a peripheral device (e.g. a hard drive, a tape drive, a removable drive, a DVD or CD drive, a network adapter, etc.), regardless of any other elements included in the electronic system.

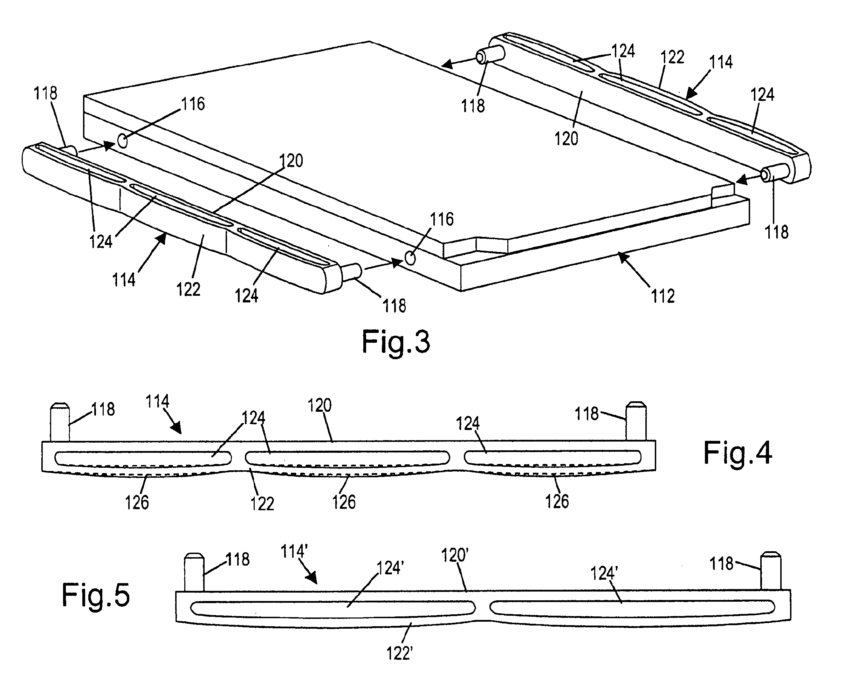

The device mounting assembly 108, as shown in Fig. 2, generally includes a device cage 110 and a peripheral device 112 mounted within the device cage 110. The peripheral device 112, as shown in Fig. 3, has device mounting rails 114 attached at holes 116 on opposite sides thereof. The device mounting rails 114 have protrusions 118 with which to snap into the holes 116 on the sides of the peripheral device 112. (See also Fig. 4.)

The device mounting rails 114 also have elongated sections 120 and 122 separated by elongated holes 124. The device mounting rails 114 may have any appropriate number of elongated holes 124, e.g. one or more. The device mounting rails 114 shown in Figs. 3 and 4, for instance, illustrate an embodiment having three elongated holes 124 (i.e. a "three-lobe spring"); whereas a device mounting rail 114' shown in Fig. 5 illustrates an embodiment having two elongated holes 124' (i.e. a "two-lobe spring").

The elongated section 120 of the device mounting rails 114 is generally flat on the side from which the protrusions 118 protrude. Thus, when the device mounting rails 114 are attached to the peripheral device 112, the flat side of the elongated section 120 may be flush with the sides of the peripheral device 112.

Along the length of each of the elongated holes 124, the other elongated section 122 of the device mounting rails 114 has a convex curvature that bows away from the flat elongated section 120. The bowed portions of the elongated section 122 allow these portions to be compressed, as illustrated in Fig. 4 by dashed lines 126, which show how the bowed portions of the elongated section 122 of the device mounting rails 114 flex inwardly. In this manner, a compressive spring force can be generated in the device mounting rails 114. The device mounting rails 114 and 114' in Figs. 3, 5 and 7 and the solid lines for the device mounting rail 114 in Fig. 4 illustrate the uncompressed shape of the device mounting rails 114 and 114'.

To enable compression of the bowed portion of the elongated section 122, the device mounting rails 114 are made of an appropriately flexible material, such as nylon, plastic or any other injection-molded material. Alternatively, bent metal, such as steel, aluminum, etc., may be used. Other flexible materials may also be appropriate.

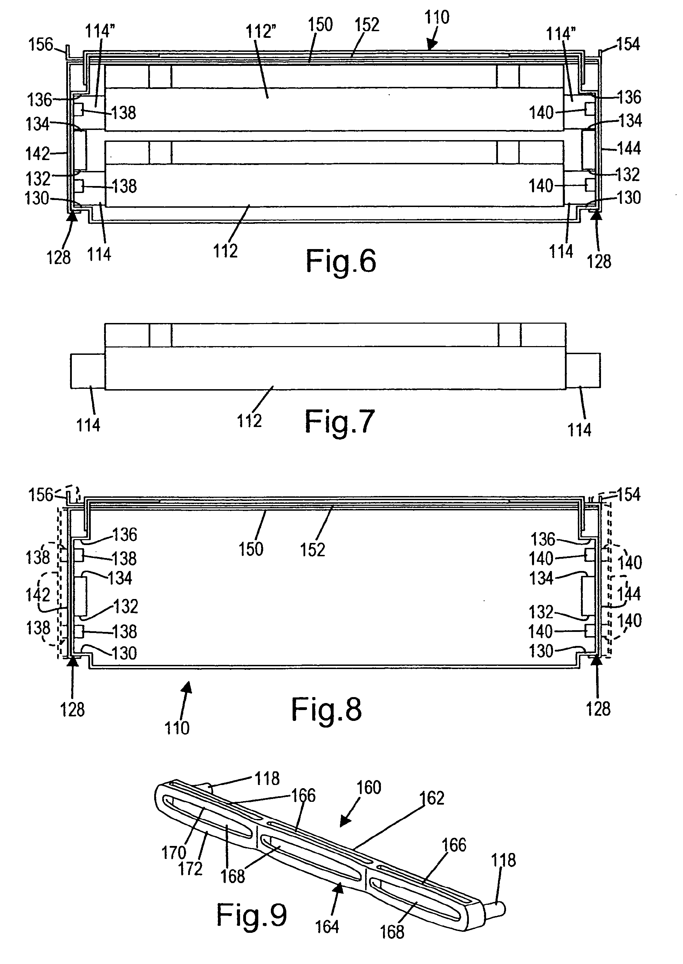

The peripheral device 112, with attached device mounting rails 114, is inserted into the device cage 110, as shown in Figs. 2 and 6, with the device mounting rails 114 guiding the peripheral device 112 between side retaining walls 128 (Figs. 2, 6 and 8) and between shoulders 130 and 132 of the retaining walls 128. Fig. 6 shows a second peripheral device 112", with attached device mounting rails 114", which is inserted in the device cage 110 with the device mounting rails 114" guiding the peripheral device 112" between the side retaining walls 128 and between additional shoulders 134 and 136 of the retaining walls 128.

When the peripheral device 112, with the device mounting rails 114 attached thereto, is inserted into the device cage 110, as shown in Figs. 2 and 6, the device mounting rails 114 are compressed between retaining walls 128 of the device cage 110 and the side of the peripheral device 112. The compression of the device mounting rails 114 generates the compressive spring force in the device mounting rails 114 between the retaining walls 128 and the side of the peripheral device 112. The compressive spring force of the device mounting rails 114 holds the peripheral device 112 in a substantially rigid relationship to the device cage 110.

Horizontal motion of the peripheral device 112 is prevented due to the compressive spring force of the device mounting rails 114. Thus, the device mounting rails 114 are formed to be wider than the gap between the retaining walls 128 and the peripheral device 112 for the maximum of the tolerance for the size of the device cage 110. Additionally, the device mounting rails 114 are formed to ensure that the bowed portion of the elongated section 122 can flex sufficiently to generate the compressive spring force and allow the device mounting rails 114 to be used with a device cage 110 formed at the minimum of the size tolerance. In this manner, the device mounting rails 114 are ensured to engage the retaining walls 128 and generate the compressive spring force for the entire tolerance range for all device cages 110. In other words, the device mounting rails 114 eliminate the clearance between the retaining walls 128 and the peripheral device 112. By contrast, a device mounting rail without the holes and bowed portions cannot reliably eliminate the clearance between the retaining walls 128 and the peripheral device 112, and therefore, cannot be formed to flex sufficiently and generate a compressive spring force to work within the entire tolerance range for all such device cages 110.

Vertical motion of the peripheral device 112 is limited by the shoulders 130 and 132 of the retaining walls 128. However, the compressive spring force in the device mounting rails 114 also limits vertical motion due to friction with the retaining walls 128.

When the peripheral device 112, with the device mounting rails 114 attached thereto, is inserted into the device cage 110, as shown in Figs. 2 and 6, the peripheral device 112 is locked in position by tabs 138 and 140 (Figs. 2, 6 and 8). The tabs 138 and 140 prevent the device mounting rails 114, and thus the peripheral device 112, from moving forward out of the device cage 110.

The tabs 138 and 140 are connected to side flexion members 142 and 144, respectively. The tabs 138 and 140 extend through holes 146 and 148, respectively, in retaining walls 128 into the interior of the device cage 110. The side flexion members 142 and 144 are connected through horizontal members 150 and 152, respectively, to activator members 154 and 156, respectively.

The activator members 154 and 156 are operated by pushing them from the positions shown by solid lines to the positions shown by dashed lines in Fig. 8. The activator members 154 and 156 may be operated in this manner either by an appropriate mechanical apparatus or by pressure from a user's fingers. For example, the user may push a button (on the exterior of the housing 102, Fig. 1) that causes the mechanical apparatus to operate the activator members 154 and 156. Alternatively, the user may reach a hand into the housing 102 to grasp and thereby operate the activator members 154 and 156. Operation of the activator members 154 and 156 causes the horizontal members 150 and 152, respectively, to push the side flexion members 142 and 144, respectively, from the positions shown by solid lines to the positions shown by dashed lines. The side flexion members 142 and 144 are attached to the retaining walls 128 at a rear end 158 (Fig. 2) of the device cage 110, so that when the side flexion members 142 and 144 are pushed to the position shown by the dashed lines in Fig. 8, the side flexion members 142 and 144 flex slightly, but then spring back to the position shown by the solid lines upon being released.

Upon operation of the activator members 154 and 156, since the tabs 138 and 140 are connected to the side flexion members 142 and 144, respectively, the tabs 138 and 140 are pushed into positions that are almost flush with the retaining walls 128. In the flush position, the tabs 138 and 140 do not lock the device mounting rails 114, and thus the peripheral device 112, into the device cage 110. The peripheral device 112 can thus be pulled forward to remove it from the device cage 110 without the use of tools.

Similarly, when installing the peripheral device 112 into the device cage 110, the activator members 154 and 156 may be operated to move the tabs 138 and 140 to the flush position, so the tabs 138 and 140 will not hinder the movement of the device mounting rails 114 and the peripheral device 112 into the device cage 110. Alternatively, the tabs 138 and 140 may be formed with an angle, as illustrated in Fig. 2, so that the tabs 138 and 140 are pushed out of the way by the device mounting rails 114 upon inserting the device mounting rails 114 and the peripheral device 112 into the device cage 110 without operating the activator members 154 and 156. In either manner, the peripheral device 112 is inserted into the computer system 100 without the use of tools.

According to an alternative embodiment, a device mounting rail 160 has elongated sections 162 and 164 separated by elongated holes 166. The elongated section 162 is similar to the elongated section 120 (Figs. 3, 4 and 5) and has protrusions 118 with which to snap into the holes 116 (Fig. 3) on the sides of the peripheral device 112. Along the length of the elongated holes 166, the other elongated section 164 has a convex curvature that bows horizontally away from the elongated section 162 in a manner similar to that of the elongated section 122 (Figs. 3, 4 and 5). Additionally, the elongated section 164 also has additional elongated holes 168 that divide the elongated section 164 into upper and lower portions 170 and 172. The additional elongated holes 168 are generally coextensive with the elongated holes 166. Furthermore, along the length of the additional elongated holes 168, the upper and lower portions 170 and 172 of the elongated section 164 have convex curvatures that bow vertically away from each other. The horizontal bowing of the elongated section 164 allows the elongated section 164 to be compressed horizontally to generate a horizontal compressive spring force in the device mounting rail 160 upon insertion of the peripheral device 112 with the attached device mounting rails 160 into the drive cage 110 (Figs. 2, 6 and 8). The vertical bowing of the elongated section 164, on the other hand, allows the elongated section 164 to be compressed vertically to generate a vertical compressive spring force in the device mounting rail 160 upon insertion of the peripheral device 112 with the attached device mounting rails 160 into the drive cage 110. Horizontal motion of the peripheral device 112 is prevented due to the horizontal compressive spring force of the device mounting rails 160. Similarly, vertical motion of the peripheral device 112 is prevented due to the vertical compressive spring force of the device mounting rails 160.

Although the present invention has been described with reference to the drive cage 110 and the operation thereof, it is understood that the present invention is not so limited. Instead, the peripheral device 112 with attached device mounting rails 114 may be used with any appropriate type of retaining walls between which the peripheral device 112 and device mounting rails 114 may be mounted. For instance, instead of being part of a separate device cage, the retaining walls may be separate elements within the computer system 100 or may be part of the housing 102 or another appropriate internal structure of the computer system 100. Additionally, instead of operating to insert or remove the peripheral device 112 in the manner described above, the retaining walls may operate in any appropriate toolless manner with any appropriate toollessly operated means for locking or holding the peripheral device 112 therein.

Additionally, although not necessarily drawn to scale, the drawings may indicate that the invention has been described with respect to certain standard peripheral devices or standard retaining means (e.g. device cages, retaining walls, etc.) having standard dimensions. It is understood, however, that the invention is not so limited, but may be used with any appropriate standard or non-standard peripheral devices and retaining means.

## Claims

1. A device mounting rail (114) for use in mounting a peripheral device (112) in a computer system (100) comprising:
a first elongated side (120) which engages the peripheral device (112) when the device mounting rail (114) is used to mount the peripheral device (112) in the computer system (100); and
a second elongated side (122) which engages a retaining wall (128) within the computer system (100) when the device mounting rail (114) is used to mount the peripheral device (112) in the computer system (100), the second elongated side (122) being compressible toward the first elongated side (120) to generate a spring force ;
and wherein, when the device mounting rail (114) is used to mount the peripheral device (112) in the computer system (100), the spring force maintains the peripheral device (112) in a substantially rigid relationship to the retaining wall (128) of the computer system (100).

2. A device mounting rail (114) as defined in claim 1 wherein:
the first and second elongated sides (120, 122) are joined together at distal endpoints thereof and at a middle point thereof; and
the second elongated side (122) is curved away from the first elongated side (120) between the middle point and the distal endpoints.

3. A device mounting rail (114) as defined in claim 1 wherein:
the first and second elongated sides (120, 122)are joined together at distal endpoints thereof and at a plurality of middle points thereof; and
the second elongated side (122) is curved away from the first elongated side (120) between each point at which the first and second elongated sides (120, 122) are joined together.

4. A computer system (100) comprising:
a housing (102);
a cage (110) mounted within the housing (102);
a peripheral device (112) toolessly mounted within the cage (110); and
a rail (114) disposed between and engaging the peripheral device (112) and the cage (110) in a spring biased manner to apply a spring force between the peripheral device (112) and the cage (110) that maintains the peripheral device (112) in a substantially rigid relationship to the cage (110).

5. A computer system (100) as defined in claim 4 wherein:
the rail (114) comprises a first longitudinal section (120) engaging the peripheral device (112) and a second longitudinal section (122) engaging the cage (110) and curved away from the first longitudinal section (120), the second longitudinal section (122) being compressed towards the first longitudinal section (120) when engaging the cage (110) to generate the spring force between the peripheral device (112) and the cage (110).

6. A computer system (100) as defined in claim 5 wherein:
the first and second longitudinal sections (120, 122) of the rail (114) are joined together at distal endpoints thereof and at a middle point thereof; and
the second longitudinal section (122) is curved away from the first longitudinal section (120) between the middle point and the distal endpoints.

7. A computer system (100) as defined in claim 5 wherein:
the first and second longitudinal sections (120, 122) of the rail (114) are joined together at distal endpoints thereof and at a plurality of middle points thereof; and
the second longitudinal section (122) is curved away from the first longitudinal section (120) between each point at which the first and second longitudinal sections (120, 122) are joined together.

8. A device mounting assembly (108) for use in a computer system (100) comprising:
a device cage (110);
a peripheral device (112) disposed within the device cage (110);
a rail (114) disposed and compressed between the peripheral device (112) and the cage (110) to generate a spring force between the peripheral device (112) and the cage (110) that maintains the peripheral device (112) in a substantially rigid relationship to the cage (110).

9. A device mounting assembly (108) as defined in claim 8 wherein:
the rail (114) comprises a first longitudinal section (120) engaging the peripheral device (112) and a second longitudinal section (122) engaging the device cage (110) and curved away from the first longitudinal section (120), the second longitudinal section (122) being compressed towards the first longitudinal section (120) when engaging the device cage (110) to generate the spring force between the peripheral device (112) and the device cage (110).

10. A method of toolessly assembling a portion of a computer system (100) comprising:
attaching device mounting rails (114) to a peripheral device (112), the device mounting rails (114) being compressible in a direction perpendicular to an elongated dimension to generate a spring force; and
sliding the peripheral device (112) with the device mounting rails (114) between retaining walls (128) of the computer system (100), the device mounting rails (114) guiding the peripheral device (112) between the retaining walls (128) and being compressed between the retaining walls (128) and the peripheral device (112) to generate the spring force in the device mounting rails (114) and to maintain the peripheral device (112) in a substantially rigid relationship to the retaining walls (128).
